# EUROPÄISCHE PATENTSCHRIFT

(11) **EP 2 512 731 B1**
(45) Veröffentlichungstag und Bekanntmachung des Hinweises auf die Patenterteilung: **18.09.2013**
(21) Anmeldenummer: 10787396.0
(22) Anmeldetag: 01.12.2010
(51) Int. Cl.: B23Q 11/00, B25D 17/20, B23B 45/00

(54) **STAUBABSAUGEINRICHTUNG**
DUST EXTRACTION EQUIPMENT
ÉQUIPEMENT DE DÉPOUSSIÉRAGE

(30) Priorität: 18.12.2009 DE 102009054970
(43) Veröffentlichungstag der Anmeldung: 24.10.2012
(73) Patentinhaber: HILTI Aktiengesellschaft, 9494 Schaan (LI)
(72) Erfinder: DESPINEUX, Frank, 88045 Friedrichshafen (DE); OHLENDORF, Oliver, 86899 Landsberg (DE)
(86) Internationale Anmeldenummer: PCT/EP2010/068612
(87) Internationale Veröffentlichungsnummer: WO 2011/073032

(56) Entgegenhaltungen:
- EP-A1- 1 842 612
- EP-A2- 1 857 221
- DE-A1- 3 126 511
- FR-A1- 2 551 686
- GB-A- 1 334 366
- US-A1- 2009 193 614

## Beschreibung

### GEBIET DER ERFINDUNG

Die vorliegende Erfindung betrifft eine Staubabsaugeinrichtung, wie sie zum Beispiel aus der EP 1 857 221 A2 bekannt ist. Ein Werkzeug der Handwerkzeugmaschine wird innerhalb eines Rohrs angeordnet, das an seinem vorderen Ende in einem Absaugkopf endet. An das Rohr kann seitlich eine Pumpe zum Absaugen von Staub angeschlossen werden. Der Staub fliegt durch das Rohr entlang des Werkzeugs. Ein Teil des Staubs dringt in die Werkzeugaufnahme ein.

Aus GB 1 334 366 A ist eine Staubabsaugeinrichtung gemäß dem Oberbegriff von Anspruch 1 bekannt.

### OFFENBARUNG DER ERFINDUNG

Eine Aufgabe besteht in eine Staubabsaugeinrichtung, welche ein Eindringen von Staub in die Werkzeugaufnahme verhindert.

Diese Aufgabe wird durch die erfindungsgemäße Staubabsaugvorrichtung gelöst.

Die erfindungsgemäße Staubabsaugvorrichtung für eine Handwerkzeugmaschine hat ein um eine Achse angeordneten äußeren Rohr, welches an seinem ersten axialen Ende durch eine Wand verschlossen ist. Für einen Pumpenanschluss ist eine Öffnung vorgesehen, welche in einer Mantelwand des äußeren Rohrs benachbart zu der Wand angeordnet ist. Ein hülsenförmiges Befestigungsmittel ist in axialer Verlängerung zu dem äußeren Rohr auf der dem äußeren Rohr gegenüberliegenden Seite der Wand angeordnet. Ein inneres Rohr ist innerhalb des äußeren Rohrs um die Achse angeordnet ist und durchsticht die Wand, wobei eine Länge des inneren Rohrs innerhalb des äußeren Rohrs wenigstens die Hälfte der Länge des äußeren Rohrs beträgt.

Eine Ausgestaltung sieht vor, dass die Wand um die Achse eine durchgehende Öffnung aufweist, in welche das innere Rohr formschlüssig eingesetzt ist.

Eine Ausgestaltung sieht vor, dass ein zweites axiales Ende des äußeren Rohrs eine Anlegefläche zum Anlegen an ein Werkstück aufweist.

Eine Ausgestaltung sieht vor, dass das innere Rohr einen Innendurchmesser zum Durchführen eines Schafts von Werkzeugen aufweist.

Eine Ausgestaltung sieht vor, dass die Wand gegenüber der Achse geneigt ist.

Eine Ausgestaltung sieht vor, dass das äußere Rohr starr ausgebildet ist.

Eine Ausgestaltung sieht vor, dass in dem äußeren Rohr Lamellen zum Versetzen eines angesaugten Luftstroms in eine Drehbewegung um die Achse angeordnet sind.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: eine Absaugeinrichtung für eine Handwerkzeugmaschine;
- Fig. 2: ein Schnitt durch die Absaugeinrichtung entlang der Ebene II-II;
- Fig. 3: eine dreidimensionale Darstellung eines vorderen Endes der Absaugeinrichtung.

### AUSFÜHRUNGSFORMEN DER ERFINDUNG

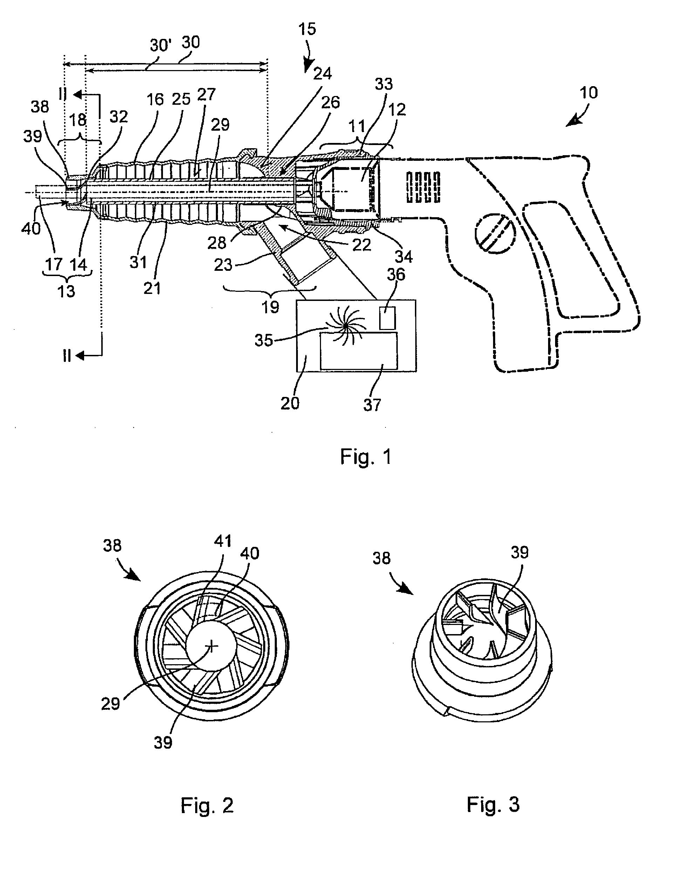

Fig. 1 zeigt eine Handwerkzeugmaschine **10**, insbesondere einen Meißelhammer oder andere schlagende Handwerkzeugmaschine. An einem Kopfende **11** hat die Handwerkzeugmaschine **10** eine Werkzeugaufnahme **12**, in welche ein Werkzeug **13** z.B. ein Meißel oder Bohrer eingesetzt werden kann. Ein Durchmesser eines Schafts **14** der Werkzeuge **13** bewegt sich im Bereich zwischen 1 cm und 2,5 cm.

Eine Staubabsaugvorrichtung **15** für die Handwerkzeugmaschine **10** kann Staub absaugen, welcher beim Abbau von Gestein oder Beton mit dem Werkzeug **13** anfällt. Der Staub wird innerhalb eines äußeren Rohrs **16** abgesaugt. Das äußere Rohr **16** umgibt dabei das Werkzeug **13**. Nur die Spitze **17** des Werkzeugs **13** ragt an einem vorderen Ende des äußeren Rohrs **16** heraus. Das vorderes Ende **18** des äußeren Rohrs **16** liegt im Anwendungsfall an dem Gestein an oder ist in geringen Abstand dazu. An einem hinteren Ende **19** des äußeren Rohrs **16** kann eine Pumpe **20** angeschlossen werden. Hierfür ist in einer Mantelwand **21** des äußeren Rohrs **16** eine Öffnung **22** vorgesehen. An der Öffnung **22** ist vorzugsweise ein Flansch **23** oder ein Schlauch befestigt, welcher mit der Pumpe **20** verbunden werden kann. Damit der Staub zu der Öffnung **22** umgelenkt wird, ist das hintere Ende **19** durch eine Wand **24** abgeschlossen.

Das äußere Rohr **16** kann weitgehend steif sein. Das äußere Rohr **16** kann in Abschnitten die Form eines Faltenbalgs haben, um eine Kompression des äußeren Rohrs **16** für ein bis zwei Zentimeter zu ermöglichen.

Ein inneres Rohr **25** ist innerhalb des äußeren Rohrs **16** angeordnet. Das innere Rohr **25** durchsticht die Wand **24**. Die Wand **24** hat eine durchgehend Öffnung **26,** in welche das innere Rohr **25** eingesetzt ist oder dessen Verlängerung das innere Rohr **25** bildet. Das Werkzeug **13** kann in dem inneren Rohr **25** durch die Wand **24** geführt werden. Eine Außenwand **27** des inneren Rohrs und die Wand **24** schließen luftdicht oder zumindest staubdicht ab. Die Öffnung **26** kann hierfür formschlüssig zu der Außenwand **27** ausgebildet sein. Alternativ können Dichtungselemente oder eine aufgespritzte Versiegelung **28** vorgesehen sein.

Die Öffnung **26** in der Wand **24** und das vordere Ende **18** des äußeren Rohrs **16** definieren eine Achse **29** entlang der das Werkzeug **13** innerhalb der Staubabsaugvorrichtung **15** geführt wird. Das innere Rohr **25** erstreckt sich entlang der Achse **29** über wenigstens die Hälfte der Länge **30** des äußeren Rohrs **16**. Die Länge **30** des äußeren Rohrs **16** wird entlang der Achse **29** ab der Wand **24** bis zu dem vorderen Ende **18** gemessen. Die Länge **30'** des inneren Rohrs **25** innerhalb des äußeren Rohrs **16** wird ebenfalls ab der Wand **24** bis zum vorderen Ende **32** des inneren Rohrs **25** gemessen. Eine Mantelwand **31** des inneren Rohrs **25** ist über dessen gesamte Länge **30'** innerhalb des äußeren Rohrs **16,** d.h. zumindest bis zu der Wand **24,** geschlossen. Die an dem vorderen Ende **18** des äußeren Rohrs **16** angesaugte Luft strömt daher zwischen dem inneren Rohr **25** und dem äußeren Rohr **16** bis zu der Absaugöffnung **22**. Die Luft innerhalb des inneren Rohrs **25** ist weitgehend unbewegt. Ein Transport von Staub entlang des Werkzeugs **13** durch die Öffnung **26** in der Wand **24** zu der Werkzeugaufnahme **12** ist gering.

Die Wand **24** ist vorzugsweise gegenüber der Achse **29** geneigt. Die Wand **24** neigt sich von der Absaugöffnung **22** ausgehend dem vorderen Ende **18** zu.

Die Staubabsaugvorrichtung **15** kann über das Kopfende **11** der Handwerkzeugmaschine **10** gestülpt befestigt werden. In axialer Verlängerung zu dem äußeren Rohr **16** ist ein hülsenförmiges Befestigungsmittel **33** vorgesehen. Das Befestigungsmittel **33** kann beispielsweise Verrastungselement **34** aufweisen, die in entsprechende Gegenelemente an dem Kopfende **11** eingreifen. Das hülsenförmige Befestigungsmittel **33** kann seitliche Aussparungen zum Bedienen der Werkzeugaufnahme **12** aufweisen.

Die Pumpe **20** kann fest mit der Staubabsaugvorrichtung **15** verbunden sein. Die Pumpe **20** beinhaltet vorzugsweise neben einem motorgetriebenen Lüfterrad **35** einen Filter **36** und einen Sammelbehälter **37** für Staub.

Eine Weiterbildung der Staubabsaugvorrichtung **15** sieht einen Ansaugkopf **38** mit Lamellen **39** in der Ansaugöffnung **40** an dem vorderen Ende **18** vor. Fig. 2 zeigt ein Schnitt durch die Staubabsaugvorrichtung **10** entlang der Ebene II-II. Fig. 3 zeigt eine dreidimensionale Ansicht des Ansaugkopfs **38**. Die Lamellen **39** sind so gestellt, dass einströmende Luft auf eine Kreisbewegung um die Achse **29** gezwungen wird. Die Lamellen **39** sind gegenüber der Achse **29** geneigt. Die Lamellen **39** können in sich gekrümmt, gleich Turbinenschaufeln oder Propellerblättern gekrümmt sein.

Auf der Oberfläche der Lamelle **39** lassen sich Linien 40, 41 definieren, welche jeweils in einem konstanten Abstand zu der Achse **29** sind. Aufgrund der Neigung der Lamellen **39** verlaufen die Linien nicht parallel zu der Achse **29**, sondern drehen sich um einen Winkel um die Achse **29**. Je größer ein radialer Abstand einer der Linien 40, 41 zur Achse **29** ist, um so geringer kann der Winkel sein (vgl. Fig. 2).

Das innere Rohr **25** kann sich bis zu den Lamellen **39** erstrecken. Vorzugsweise grenzt das innere Rohr **25** an die Lamellen **39** in axialer Richtung an. Die Luft im Bereich der Achse **29** wird durch die Lamellen **39** verwirbelt und zur Mantelwand des äußeren Rohrs **16** transportiert. Damit dies effektiv geschehen kann es von Vorteil sein, dass das innere Rohr 25 mit den Lamellen **39** in axialer Richtung nicht überlappt.

## Patentansprüche

1. Staubabsaugvorrichtung (15) für eine Handwerkzeugmaschine mit einem um eine Achse (29) angeordneten äußeren Rohr (16), welches an seinem ersten axialen Ende (19) durch eine Wand (24) verschlossen ist;
eine für einen Pumpenanschluss (23) vorgesehene Öffnung (22), welche in einer Mantelwand (21) des äußeren Rohrs (16) benachbart zu der Wand (24) angeordnet ist; einem hülsenförmigen Befestigungsmittel (33), das in axialer Verlängerung zu dem äußeren Rohr (16) auf der dem äußeren Rohr (16) gegenüberliegenden Seite der Wand (24) angeordnet ist; **gekennzeichnet durch**
ein inneres Rohr (25), das innerhalb des äußeren Rohrs (16) um die Achse (29) angeordnet ist und die Wand (24) durchsticht, wobei eine Länge (30') des inneren Rohrs (25) innerhalb des äußeren Rohrs (16) wenigstens die Hälfte der Länge (30) des äußeren Rohrs (16) beträgt.

2. Staubabsaugvorrichtung nach Anspruch 1, **dadurch gekennzeichnet, dass** die Wand (24) um die Achse (29) eine durchgehende Öffnung (26) aufweist, in welche das innere Rohr (25) formschlüssig eingesetzt ist.

3. Staubabsaugvorrichtung nach Anspruch 1, **dadurch gekennzeichnet, dass** ein zweites axiales Ende (18) des äußeren Rohrs (16) eine Anlegefläche zum Anlegen an ein Werkstück aufweist.

4. Staubabsaugvorrichtung nach einem der vorhergehenden Ansprüche, **dadurch gekennzeichnet, dass** das innere Rohr (25) einen Innendurchmesser ausreichend zum Durchführen eines Schafts von Werkzeugen aufweist.

5. Staubabsaugvorrichtung nach einem der vorhergehenden Ansprüche, **dadurch gekennzeichnet, dass** die Wand (24) gegenüber der Achse (29) geneigt ist.

6. Staubabsaugvorrichtung nach einem der vorhergehenden Ansprüche, **dadurch gekennzeichnet, dass** das äußere Rohr (16) starr ausgebildet ist.

7. Staubabsaugvorrichtung nach einem der vorhergehenden Ansprüche, **dadurch gekennzeichnet, dass** in dem äußeren Rohr (16) Lamellen (39) zum Versetzen eines angesaugten Luftstroms in eine Drehbewegung um die Achse (29) angeordnet sind.

8. Staubabsaugvorrichtung nach Anspruch 7, **dadurch gekennzeichnet, dass** das innere Rohr (25) an die Lamellen (39) in axialer Richtung angrenzt.

## Claims

1. Dust extraction device (15) for a hand-held machine tool, comprising an outer tube (16) which is arranged around an axis (29) and is closed at its first axial end (19) by a wall (24);
an opening (22) which is provided for a pump connection (23) and is arranged in a lateral wall (21) of the outer tube (16) adjacently to the wall (24);
a sleeve-shaped fastening means (33) which is arranged in axial prolongation to the outer tube (16) on the side of the wall (24) opposite to the outer tube (16),
**characterised by**
an inner tube (25) which is arranged inside the outer tube (16) around the axis (29) and which passes through the wall (24), a length (30') of the inner tube (25) inside the outer tube (16) being at least half of the length (30) of the outer tube (16).

2. Dust extraction device according to Claim 1, **characterised in that** the wall (24) has around the axis (29) a through-opening (26) in which the inner tube (25) is inserted in a form-fitting manner.

3. Dust extraction device according to Claim 1, **characterised in that** a second axial end (18) of the outer tube (16) has an abutment face for abutting against a workpiece.

4. Dust extraction device according to any one of the preceding claims, **characterised in that** the inner tube (25) has an internal diameter sufficient to allow a tool shank to pass therethrough.

5. Dust extraction device according to any one of the preceding claims, **characterised in that** the wall (24) is inclined with respect to the axis (29).

6. Dust extraction device according to any one of the preceding claims, **characterised in that** the outer tube (16) is of rigid configuration.

7. Dust extraction device according to any one of the preceding claims, **characterised in that** blades (39) for imparting a rotary motion to an aspirated air stream are arranged in the outer tube (16) around the axis (29).

8. Dust extraction device according to Claim 7, **characterised in that** the inner tube (25) abuts the blades (39) in the axial direction.

## Revendications

1. Dispositif de dépoussiérage (15) pour une machine-outil à main, comportant :
un tube extérieur (16) agencé autour d'un axe (29), lequel tube extérieur est fermé par une paroi (24) à sa première extrémité axiale (19),
une ouverture (22) prévue pour un raccord de pompe (23), laquelle ouverture est agencée au voisinage de la paroi (24) dans une paroi d'enveloppe (21) du tube extérieur (16),
des moyens de fixation en forme de douille (33) agencés sur le côté de la paroi (24) opposé au tube extérieur (16) dans une extension axiale par rapport au tube extérieur (16),
**caractérisé par** un tube intérieur (25) agencé à l'intérieur du tube extérieur (16) autour de l'axe (29) et pénétrant dans la paroi (24), dans lequel une longueur (30') du tube intérieur (25) à l'intérieur du tube extérieur (16) est au moins égale à la moitié de la longueur (30) du tube extérieur (16).

2. Dispositif de dépoussiérage selon la revendication 1, **caractérisé en ce que** la paroi (24) comporte une ouverture traversante (26) autour de l'axe (29), dans laquelle le tube intérieur (25) est inséré par complémentarité de formes.

3. Dispositif de dépoussiérage selon la revendication 1, **caractérisé en ce qu'**une seconde extrémité axiale (18) du tube extérieur (16) comporte une surface d'application destinée à s'appliquer sur une pièce.

4. Dispositif de dépoussiérage selon l'une des revendications précédentes, **caractérisé en ce que** le tube intérieur (25) a un diamètre intérieur suffisant pour le passage d'une broche d'outil.

5. Dispositif de dépoussiérage selon l'une des revendications précédentes, **caractérisé en ce que** la paroi (24) est inclinée par rapport à l'axe (29).

6. Dispositif de dépoussiérage selon l'une des revendications précédentes, **caractérisé en ce que** le tube extérieur (16) est formé de manière rigide.

7. Dispositif de dépoussiérage selon l'une des revendications précédentes, **caractérisé en ce que** des lamelles (39) sont agencées dans le tube extérieur (16) pour déplacer un flux d'air aspiré par un mouvement de rotation autour de l'axe (29).

8. Dispositif de dépoussiérage selon la revendication 7, **caractérisé en ce que** le tube intérieur (25) borde les lamelles (39) dans une direction axiale.
